# EUROPEAN PATENT SPECIFICATION

(11) **EP 3 867 183 B1**
(45) Date of publication and mention of the grant of the patent: **14.08.2024**
(21) Application number: 18792420.4
(22) Date of filing: 16.10.2018
(51) Int. Cl.: B66B 1/34, G06F 21/31, G06F 21/44, H04L 9/40

(54) **METHOD OF CONTROLLING SEGREGATION OF TRANSPORTATION INFRASTRUCTURE DATA WITHIN A SHARED DATA NETWORK**
VERFAHREN ZUR STEUERUNG DER SEGREGATION VON TRANSPORTINFRASTRUKTURDATEN IN EINEM GEMEINSAM GENUTZTEN DATENNETZ
PROCÉDÉ DE COMMANDE DE LA SÉGRÉGATION DE DONNÉES D'INFRASTRUCTURE DE TRANSPORT DANS UN RÉSEAU DE DONNÉES PARTAGÉ

(43) Date of publication of application: 25.08.2021
(73) Proprietor: KONE Corporation, 00330 Helsinki (FI)
(72) Inventor: PIIRONEN, Mikko, 00330 Helsinki (FI); KOSKINEN, Santtu, 00330 Helsinki (FI); RANTAMÄKI, Anssi, 00330 Helsinki (FI); HEISKANEN, Mikko, 00330 Helsinki (FI); KOIVISTO, Ari, 00330 Helsinki (FI); MATTILA, Mikko, 00330 Helsinki (FI)
(74) Representative: Papula Oy
(86) International application number: PCT/FI2018/050744
(87) International publication number: WO 2020/079312

(56) References cited:
- WO-A1-2007/093665
- WO-A1-2015/084396
- WO-A1-2018/050654
- US-A1- 2014 045 479
- US-B2- 8 891 423
- - -: "Connected Rail Solution Design Guide", 2 November 2016 (2016-11-02), pages 1 - 42, XP055613499, Retrieved from the Internet <URL:https://www.cisco.com/c/dam/en_us/solutions/industries/docs/cts-dg.pdf> [retrieved on 20190819]

## Description

### DESCRIPTION OF BACKGROUND

The following description relates transportation infrastructure within buildings and public places. More particularly the application relates to elevators and/or escalators and allowing the use of generic elevator and escalator peripheral devices in a transportation infrastructure control network.

Modern elevators are network connected devices that can be accessing resources from one or more external entities providing services to elevators and escalators for the benefit of passengers. In addition to the improvement of passenger comfort and efficiency, the network connectivity may be used for several other purposes, for example entertainment or data collection.

A common approach for providing network connectivity is to use specially designed dedicated network technologies that are configured to reliably and timely provide safety and elevator control related messages to the receiving network components. In many occasions these special purpose dedicated networks use technologies that are compatible with old cables and old technology of elevators. Special purpose dedicated networks have been easy to configure and maintain. Thus, they have been preferred solutions and under continuous development.

Nowadays the network connectivity does not only relate to external devices connected to an elevator system. Even some components that are relevant or even essential for normal operation of an elevator or escalator group can be connected using data communication networks.

In this description, these components are referred to as applications. The applications may be implemented as hardware or software. Many applications involving hardware also include software, and software applications may be executed in a server or central computing resource. Thus, an application can be described as an entity providing services to requesting clients. An example of an application is a group controller. An example of a client is a destination operating panel installed in an elevator arrangement.

Current elevators use a network arrangement that is in this description referred to as a Transportation infrastructure network (TICN). A TICN can be a combination of wired and wireless network solutions.

The TICN is used for connecting elevator and escalator components together. Particularly, they are used for connecting Elevator Escalator Peripheral Devices (EEPD) to the elevator arrangement. When new peripheral devices, which are here discussed as an example of client entities, are added to the elevator or escalator arrangement, the peripheral devices must be detected and connected to the network appropriately. The same applies when already existing peripheral devices need to be disconnected and then reconnected to the arrangement. Further needs may arise from other possible reorganizing related tasks.

In addition to applications and elevator/escalator peripheral devices, also external devices and generic peripheral devices may be attached to the transportation infrastructure control network. A generic peripheral device is understood to be a peripheral device of more general nature. Generic peripheral devices are typically sold to several different purposes and are not intended to elevator and escalator environments only. Examples of generic peripheral devices include display units, speaker arrangements, wireless network base stations and other similar components.

As discussed above, attaching peripheral devices and other devices to a TICN may require a complicated configuration process. Conventionally, the configuration process has been made easier by using preconfigured devices; however, in modern elevator arrangements this is a difficult task as the elevator system may be a part of a building network that is complicated and continuously changed. Furthermore, these devices are commonly installed in spaces with limited access. An example of such limited space is the elevator shaft. Typically, working in elevator shafts requires a special qualification for elevator environment.

When networks are built into modern buildings, the number of network elements, such as switches, may be very high. For example, it is possible that each elevator shaft has a network switch or router on each landing floor level. These network switches form a complicated network topology. Thus, there is a need for configuring these network elements that provide a base for a TICN.

WO2007093665 discloses an arrangement for producing services in the communication system of a building according to the preamble of claim 1.

US8891423 discloses methods and apparatus for performing group-based machine-to-machine communication. Cisco connected rail solution design guide covers the solution design and best practice recommendations from Cisco for connected rail deployments. WO2015084396 discloses arrangements to receiving, by a computing device comprising a processor, a request for at least one service associated with an elevator system from a mobile device over a cellular network, validating the request based on a determined location of the mobile device, and causing at least one resource associated with the at least one service to be scheduled based on the validating indicating that the request is approved.

### SUMMARY

The invention is set out in the appended set of claims.

In an aspect a method, which is executed in a controller of aspect an elevator and/or escalator arrangement, for connecting a generic peripheral device to a transportation infrastructure control network, wherein the generic peripheral device is connected to the transportation infrastructure control network controller through a network element, is disclosed. The method comprises receiving an indication of attaching of a peripheral device; selecting a profile from a set of predetermined profiles for the attached peripheral device; and instructing the network element to assign the selected profile to the generic peripheral device.

A benefit of the method described above is that it provides a possibility to share a data communication network arrangement that has been constructed for an elevator or escalator. This may remove a need to construct another building network, so that resources are saved, and also complicated operations on buildings are avoided. Furthermore, this provides an easy access point for all kinds of devices in such a manner that elevators and escalators are not disturbed. Even if the transportation infrastructure control network only forms a part of the overall building network, the method according to the aspect is beneficial as it reduces operating and construction costs.

In an implementation the method further comprises sending an authentication request to the peripheral device; receiving a response to the authentication request. It is beneficial to use authentication in the method so that only authorized devices may be connected.

In an implementation the network element is a switch. It is beneficial to configure the switches of a network using the method as described above, as it provides an efficient way of configuring a network consisting of several switches.

In an implementation the method further comprises determining the set of predetermined profiles. It is beneficial to determine a set of profiles that can be assigned to different types of peripheral devices, so that the peripheral devices get enough network capacity in order to work, and also so that the information security of the network can be maintained.

In an implementation the method further comprises generating a set of communication rules in accordance with the set of predetermined profiles. It is beneficial to use rules determined in accordance with the profiles, so that the profiles get enough network capacity and are allowed only to use the network capacity needed for the device in order to maximize the overall capacity of the network.

In an implementation the method further comprises transmitting a set of communication rules to each network element in the transportation infrastructure control network. It is beneficial to distribute the communication rules to the network using network elements, such as switches, so that the network elements will know how to transmit the data in the network.

According to the invention a transportation infrastructure control network controller as a part of an elevator and/or escalator arrangement is disclosed. The elevator and network controller comprises at least one processor configured to execute computer program code; at least one memory configured to store computer programs and related data; at least one network interface configured to connect the transportation infrastructure control network controller with at least one network element. The transportation infrastructure control network controller is configured to perform a method as described above.

A benefit of the invention is that it provides a possibility to share a data communication network arrangement that has been constructed for an elevator or escalator. This may remove a need to construct another building network, so that resources are saved, and also complicated operations on buildings are avoided. Furthermore, this provides an easy access point for all kinds of devices in such a manner that elevators and escalators are not disturbed. Even if the transportation infrastructure control network only forms a part of the overall building network, the network controller according to the aspect is beneficial as it reduces operating and construction costs.

According to the invention an elevator and/or escalator arrangement is disclosed, comprising a transportation infrastructure control network comprising a transportation infrastructure control network controller as described above. It is beneficial to use the transportation infrastructure control network controller as described above for providing the networks to elevator and escalator installations.

According to the invention the arrangement further comprises at least one network element and at least one generic peripheral device. It is beneficial that the arrangement according to the implementation can use different types of components connected to the network.

The methods, devices and systems discussed above are beneficial, as they increase the possibility to use an existing transportation infrastructure network for providing network connectivity to a building which does not otherwise have an adequate network infrastructure. In a new building, it reduces costs by removing a need to build two different networks for the building.

### BRIEF DESCRIPTION OF THE DRAWINGS

The accompanying drawings, which are included to provide a further understanding of the method of controlling segregation of elevator/escalator control data within a shared data network and constitute a part of this specification, illustrate example embodiments and together with the description help to explain the principles of the method of controlling segregation of elevator/escalator control data within a shared data network. In the drawings:
**Fig. 1** is a block diagram of an example network used in an elevator and escalator environment;
**Fig. 2** is a flow chart of an example method; and
**Fig. 3** is a signaling chart according to an example.

### DETAILED DESCRIPTION

Reference will now be made in detail to the embodiments, examples of which are illustrated in the accompanying drawings.

In the following description, an elevator is used as an example. The arrangement is also suitable for escalators and systems comprising both elevators and escalators.

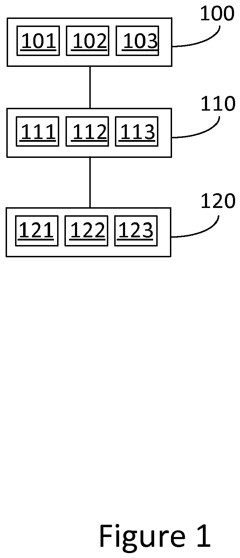

In figure 1 a block diagram of an example network arrangement that can be used in an elevator and escalator environment is shown. Figure 1 is used for providing a better understanding of how the method explained below can be implemented. Figure 1 shows a network controller 100, a network element 110 and a peripheral device 120. The network controller 100 is a controller device that is configured to control the elevator and/or escalator network. The controller is responsible for providing access rights, configuration settings and the like. The network controller may be one device, or it may be divided into a plurality of devices.

The network element 110 may be a switch to which a peripheral device 120 is attached. The network element 110 is configured to route data communication between a peripheral device and a network controller. In figure 1, only one network element is shown; however, commonly a plurality of network elements are connected to one network controller. Accordingly, it is common that a plurality of peripheral devices are connected to network elements. The peripheral device 120 connected to the network controller 100 in this example is a generic peripheral device. A generic peripheral device is a device that is connected to a TICN, but it does not have a functionality directly related to the elevator/escalator control. An example of such generic peripheral devices is an additional display. It is also possible that the generic peripheral device may be used for connecting further devices. In such a case the generic peripheral device may be, for example, a wireless local area network base station that is configured to provide limited or full internet access to devices in the vicinity of the base station.

The network controller 100 comprises at least one processor 101, at least one memory 102 and at least one network connection interface 103. The at least one processor 101 is configured to execute computer programs that are used to implement the method described below. The at least one memory 102 may comprise volatile and non-volatile portions, and is configured to store computer programs and related data. The network connection interface 103 is used to connect network elements to the controller, and also possibly to connect the controller to the internet.

The network element 110 comprises at least one processor 111, at least one memory 112 and at least one network connection interface 113. The at least one processor 111 is configured to execute computer programs that are used to implement the method described below. The at least one memory 112 may comprise volatile and non-volatile portions, and is configured to store computer programs and related data. The network connection interface 113 is used to connect peripheral devices to the controller through the network element 110.

The generic peripheral device 120 comprises at least one processor 121, at least one memory 122 and at least one network connection interface 123. The at least one processor 121 is configured to execute computer programs that are used to implement the method described below. The at least one memory 122 may comprise volatile and non-volatile portions, and is configured to store computer programs and related data. The network connection interface 123 is used to connect the peripheral device to the controller, and also possibly to other devices connected to the peripheral device.

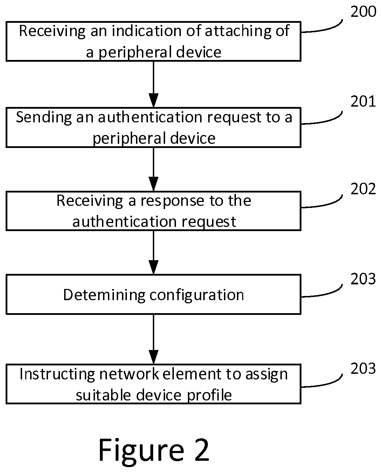

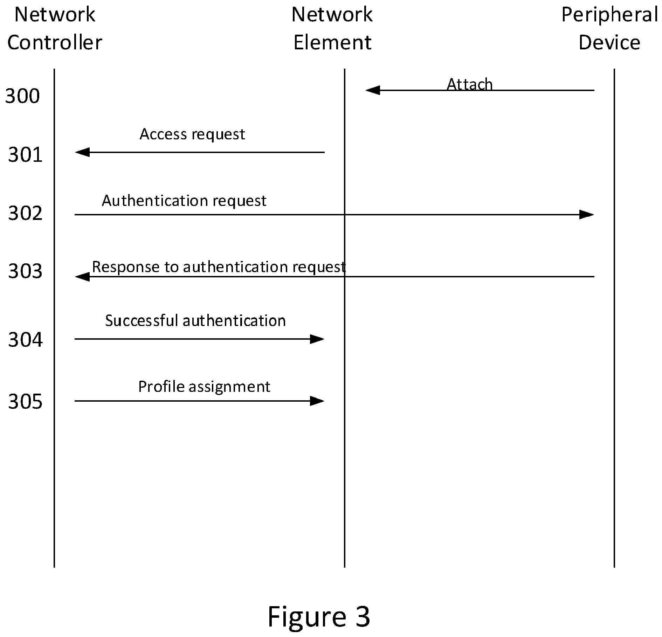

In figures 2 and 3, a method and signaling are shown. These figures do not include the preparatory steps that are described in the following. When a peripheral device is attached to the transportation infrastructure control network, a profile is assigned to the device. The profile may be particularly designed for the attached peripheral device, or it may be selected from a set of predetermined profiles that are generic for all peripheral devices. These profiles determine, for example, the priority of data transmissions, the maximum bandwidth associated with the peripheral device, and other quality of service related matters. In addition to the quality of service, the profile may include a data security related configuration, for example which other devices the peripheral device may communicate with. For example, if the peripheral device is an elevator/escalator peripheral device, it may be granted a high priority and access to only communicate with other elevator/escalator peripheral devices and the network controller. If the peripheral device is a generic peripheral device, such as the device of figure 1, the generic peripheral device may be granted a lower priority and a connection only to the internet, and possibly to other generic peripheral devices. This prevents communication with the elevator/escalator peripheral devices and increases the security.

The profiles are associated with rules determining the functionality described above. Thus, the preliminary preparations include creating a list of communication controlling rules for the network elements of the TICN. This set of rules is based on a desired communication matrix between peripherals and resources in the network. The rules define which types of connected peripherals can communicate with each other, and which network resources they can access. The rules can also implement classification and prioritization of traffic related to each type of peripheral devices. These rules are distributed to the network elements of the TICN as part of the network commissioning.

In figure 2 an example of a method of controlling segregation of elevator/escalator control data within a shared data network is shown. The method is initiated by receiving, at the network controller, an indication that a peripheral device, such as the generic peripheral device of figure 1, is attached to a network element that is further connected to a network controller, step 200. The indication is received at the network controller through a network element. Thus, the indication may already comprise additional tasks, such as an access request. The indication of attaching may be generated automatically or manually.

After receiving the indication, the network controller sends an authentication request to the peripheral device, step 201. The peripheral device responds to the authentication request, step 202. When the authentication has been received, it is possible to determine a correct profile for the attached generic peripheral device, step 203. The correct profile has been associated with an appropriate network configuration, for example routing rules that are transmitted to the network element responsible for communicating with the attached generic peripheral device, step 204.

Figure 3 is a signaling chart providing a better understanding of the arrangement and the method discussed above. The signaling starts with an indication of an attachment signal, 300. This is generated when a generic peripheral device is connected to a network element, and the generic peripheral device wishes to gain connectivity, for example to the internet or to other peripheral devices. The network element to which the generic peripheral device is connected generates an access request signal 301 to the network controller.

The network controller receives the access request. As a response it will perform an authentication of the attached generic peripheral device, and transmits an authentication request signal, 302. Then the generic peripheral device generates a response signal 303 to the authentication request. When the authentication is successful, an acknowledgement signal of a successful authentication 304 is generated and sent to the network element, so that the generic peripheral device is connected to the network. Lastly, a profile assignment and other routing rules are sent to the network element, 305.

The above described methods may be implemented as computer software which is executed in a computing device that can be connected to a data communication network. When the software is executed in a computing device, it is configured to perform the above described inventive method. The software is embodied on a computer readable medium, so that it can be provided to the computing device, such as the transportation infrastructure control network controller of figure 1.

As stated above, the components of the exemplary embodiments can include a computer readable medium or memories for holding instructions programmed according to the teachings of the present embodiments and for holding data structures, tables, records, and/or other data described herein. The computer readable medium can include any suitable medium that participates in providing instructions to a processor for execution. Common forms of computer-readable media can include, for example, a floppy disk, a flexible disk, hard disk, magnetic tape, any other suitable magnetic medium, a CD-ROM, CD±R, CD±RW, DVD, DVD-RAM, DVD±RW, DVD±R, HD DVD, HD DVD-R, HD DVD-RW, HD DVD-RAM, Blu-ray Disc, any other suitable optical medium, a RAM, a PROM, an EPROM, a FLASH-EPROM, any other suitable memory chip or cartridge, a carrier wave or any other suitable medium from which a computer can read.

It is obvious to a person skilled in the art that with the advancement of technology, the basic idea of the method of controlling segregation of elevator/escalator control data within a shared data network may be implemented in various ways within the scope of the claims.

## Claims

1. An elevator and/or escalator arrangement comprising a transportation infrastructure control network **characterized in that**, the transportation infrastructure control network is used for connecting elevator and escalator components and further comprises a transportation infrastructure control network controller (100) which further comprises:
at least one processor (101) configured to execute computer program code;
at least one memory (102) configured to store computer programs and related data;
at least one network interface (103) configured to connect the transportation infrastructure control network controller (100) with at least one network element (110);
wherein, when connecting a generic peripheral device to the transportation infrastructure control network controller through a network element, the transportation infrastructure control network controller (100) is configured to:
receive an indication of attaching (200) of a peripheral device;
select (203) a profile from a set of predetermined profiles for the attached peripheral device; and
instruct the network element to assign (203) the selected profile to the generic peripheral device.

2. An elevator and/or escalator arrangement according to claim 1, wherein the transportation infrastructure control network controller (100) is further configured to:
send an authentication request (201) to the peripheral device; and
receive a response to the authentication request (202) .

3. An elevator and/or escalator arrangement according to claim 1 or 2, wherein the network element is one of the following: a switch, router and wireless access point.

4. An elevator and/or escalator arrangement according to claim 1, 2 or 3, wherein the transportation infrastructure control network controller (100) is further configured to determine the set of predetermined profiles.

5. An elevator and/or escalator arrangement according to any of claims 1 - 4, wherein the transportation infrastructure control network controller (100) is further configured to generate a set of communication rules in accordance with the set of predetermined profiles.

6. An elevator and/or escalator arrangement according to any of claims 1 - 5, wherein the transportation infrastructure control network controller (100) is further configured to: transmit a set of communication rules to one or more network elements in the transportation infrastructure control network.

## Patentansprüche

1. Aufzug- und/oder Rolltreppenanordnung, umfassend ein Transportinfrastruktur-Steuerungsnetzwerk, **dadurch gekennzeichnet, dass** das Transportinfrastruktur-Steuerungsnetzwerk zum Verbinden von Aufzug- und Rolltreppenkomponenten verwendet wird und ferner eine Transportinfrastruktur- Steuerungsnetzwerksteuerung (100) umfasst, die ferner umfasst:
mindestens einen Prozessor (101), der dazu konfiguriert ist, Computerprogrammcode auszuführen;
mindestens einen Speicher (102), der dazu konfiguriert ist, Computerprogramme und zugehörige Daten zu speichern;
mindestens eine Netzwerkschnittstelle (103), die dazu konfiguriert ist, die Transportinfrastruktur-Steuerungsnetzwerksteuerung (100) mit mindestens einem Netzwerkelement (110) zu verbinden;
wobei, wenn eine generische periphere Vorrichtung mit der Transportinfrastruktur-Steuerungsnetzwerksteuerung über ein Netzwerkelement verbunden wird, die Transportinfrastruktur-Steuerungsnetzwerksteuerung (100) dazu konfiguriert ist:
eine Angabe des Anbringens (200) einer peripheren Vorrichtung zu empfangen;
ein Profil von einem Set von vorbestimmten Profilen für die angebrachte periphere Vorrichtung auszuwählen (203); und
das Netzwerkelement zu instruieren, das ausgewählte Profil der generischen peripheren Vorrichtung zuzuweisen (203).

2. Aufzug- und/oder Rolltreppenanordnung nach Anspruch 1, wobei die Transportinfrastruktur-Steuerungsnetzwerksteuerung (100) ferner dazu konfiguriert ist:
eine Authentifizierungsanforderung (201) an die periphere Vorrichtung zu senden; und
eine Antwort auf die Authentifizierungsanforderung (202) zu empfangen.

3. Aufzug- und/oder Rolltreppenanordnung nach Anspruch 1 oder 2, wobei das Netzwerkelement eines der folgenden ist: ein Switch, ein Router und ein drahtloser Zugangspunkt.

4. Aufzug- und/oder Rolltreppenanordnung nach Anspruch 1, 2 oder 3, wobei die Transportinfrastruktur-Steuerungsnetzwerksteuerung (100) ferner dazu konfiguriert ist, das Set von vorbestimmten Profilen zu bestimmen.

5. Aufzug- und/oder Rolltreppenanordnung nach einem der Ansprüche 1 bis 4, wobei die Transportinfrastruktur-Steuerungsnetzwerksteuerung (100) ferner dazu konfiguriert ist, ein Set von Kommunikationsregeln in Übereinstimmung mit dem Set von vorbestimmten Profilen zu erzeugen.

6. Aufzug- und/oder Rolltreppenanordnung nach einem der Ansprüche 1 bis 5, wobei die Transportinfrastruktur-Steuerungsnetzwerksteuerung (100) ferner dazu konfiguriert ist: ein Set von Kommunikationsregeln an ein oder mehrere Netzwerkelemente in dem Transportinfrastruktur-Steuerungsnetzwerk zu übertragen.

## Revendications

1. Agencement d'ascenseur et/ou d'escalier mécanique comprenant un réseau de commande d'infrastructure de transport **caractérisé en ce que**, le réseau de commande d'infrastructure de transport est utilisé pour connecter des composants d'ascenseur et d'escalier mécanique et comprend en outre un dispositif de commande (100) de réseau de commande d'infrastructure de transport qui comprend en outre :
au moins un processeur (101) configuré pour exécuter un code de programme informatique ;
au moins une mémoire (102) configurée pour stocker des programmes informatiques et des données associées ;
au moins une interface (103) de réseau configurée pour connecter le dispositif de commande (100) de réseau de commande d'infrastructure de transport à au moins un élément (110) de réseau ;
dans lequel, lors d'une connexion d'un dispositif périphérique générique au dispositif de commande de réseau de commande d'infrastructure de transport par le biais d'un élément de réseau, le dispositif de commande (100) de réseau de commande d'infrastructure de transport est configuré pour :
recevoir une indication de rattachement (200) d'un dispositif périphérique ;
sélectionner (203) un profil à partir d'un ensemble de profils prédéterminés pour le dispositif périphérique rattaché ; et
ordonner à l'élément de réseau d'affecter (203) le profil sélectionné au dispositif périphérique générique.

2. Agencement d'ascenseur et/ou d'escalier mécanique selon la revendication 1, dans lequel le dispositif de commande (100) de réseau de commande d'infrastructure de transport est en outre configuré pour :
envoyer une demande (201) d'authentification au dispositif périphérique ; et
recevoir une réponse à la demande (202) d'authentification.

3. Agencement d'ascenseur et/ou d'escalier mécanique selon la revendication 1 ou la revendication 2, dans lequel l'élément de réseau est un des éléments suivants : un commutateur, un routeur et un point d'accès sans fil.

4. Agencement d'ascenseur et/ou d'escalier mécanique selon la revendication 1, la revendication 2 ou la revendication 3, dans lequel le dispositif de commande (100) de réseau de commande d'infrastructure de transport est en outre configuré pour déterminer l'ensemble de profils prédéterminés.

5. Agencement d'ascenseur et/ou d'escalier mécanique selon l'une quelconque des revendications 1 à 4, dans lequel le dispositif de commande (100) de réseau de commande d'infrastructure de transport est en outre configuré pour générer un ensemble de règles de communication selon l'ensemble de profils prédéterminés.

6. Agencement d'ascenseur et/ou d'escalier mécanique selon l'une quelconque des revendications 1 à 5, dans lequel le dispositif de commande (100) de réseau de commande d'infrastructure de transport est en outre configuré pour : transmettre un ensemble de règles de communication à un ou plusieurs éléments de réseau dans le réseau de commande d'infrastructure de transport.
